# EUROPÄISCHE PATENTSCHRIFT

(11) **EP 1 719 649 B1**
(45) Veröffentlichungstag und Bekanntmachung des Hinweises auf die Patenterteilung: **20.03.2013**
(21) Anmeldenummer: 06009207.9
(22) Anmeldetag: 04.05.2006
(51) Int. Cl.: B60H 1/00, F24H 3/04, F24H 9/14, B60H 1/22

(54) **Kleinheizlüfter**
Small heater blower
Petit radiateur de soufflante

(30) Priorität: 06.05.2005 DE 202005007499 U
(43) Veröffentlichungstag der Anmeldung: 08.11.2006
(73) Patentinhaber: ebm-papst St. Georgen GmbH & Co. KG, 78112 St. Georgen (DE)
(72) Erfinder: Winkler, Wolfgang A., 78112 St. Georgen (DE)
(74) Vertreter: Raible, Tobias

(56) Entgegenhaltungen:
- EP-A- 0 193 956
- US-A- 3 223 828
- US-A- 5 414 794

## Beschreibung

Die Erfindung betrifft einen Kleinheizlüfter, insbesondere für Fahrzeuge.

Fahrzeuge neuerer Bauart haben Antriebsaggregate mit Wirkungsgraden, die gegenüber früheren Motoren sehr stark verbessert sind. Dies bedeutet, dass für die Heizung solcher Fahrzeuge wenig Abwärme zur Verfügung steht, d.h. wenn nicht zusätzliche Maßnahmen getroffen werden, frieren deren Insassen, wenn das Wetter kalt ist. Dies gilt insbesondere für Dieselfahrzeuge, aber auch für Fahrzeuge mit Brennstoffzellenantrieben, und für Benzinfahrzeuge mit Hybridantrieb.

Aus diesem Grund verwendet man zusätzliche Heizaggregate, die teils mit Kraftstoff, teils mit Elektrizität betrieben werden.

Solche Heizaggregate sollten vom Start weg wirksam sein, um den Fahrgastraum, den Fahrersitz, das Lenkrad, die Frontscheibe, das Dieselfilter etc. zu erwärmen und dadurch die Verkehrssicherheit zu erhöhen.

Zu diesem Zweck kann man in den ersten Minuten nach dem Start mittels eines kleinen elektrischen Heizaggregats erwärmte Luft in den Fahrersitz einblasen, ebenso in den hinteren Fußraum, sowie am Dieselfilter, um dort ein Ausflocken von Paraffin zu vermeiden.

Aus der US-A-5 414 794 kennt man einen Heizlüfter mit einem Lüftergehäuse und einem Schutzgitter. In der Mitte des Schutzgitters ist ein Innenläufermotor montiert. Dieser treibt ein Lüfterrad an, das Luft durch das Schutzgitter ansaugt. Am Schutzgitter sind hitzebeständige Glimmerplatten mit Öffnungen montiert, und in diese Öffnungen wird der Heizdraht eingehängt. Dies ermöglich eine separate Prüfung des Schutzgitters mit dem Lüftermotor und dem an den Glimmerplatten eingehängten Heizdraht. Das Schutzgitter wird nach Prüfung über eine Rastverbindung mit dem Lüftergehäuse verbunden.

Es ist deshalb eine Aufgabe der Erfindung, einen neuen Kleinheizlüfter bereit zu stellen.

Nach der Erfindung wird diese Aufgabe gelöst durch einen Kleinheizlüfter gemäß Anspruch 1. Ein solcher Kleinheizlüfter lässt sich sehr kompaktbauen. Durch die Rastverbindung erhält man einen modularen Aufbau, so dass mit dem Lüftergehäuse je nach den Erfordernissen Heizregister unterschiedlicher Leistung gekoppelt werden können, z.B. auch über Winkelstücke und dgl. Für eine Verwendung in arktischen Gebieten wird man Heizregister mit höherer Leistung verwenden als für die Verwendung in einem tropischen Land. Auch erleichtert dieser Aufbau die Reinigung eines solchen Aggregats und ggf. den Austausch defekter Teile, und Man erhält hierdurch einen sehr kompakten Kleinheizlüfter mit guter Leistung.

Dabei wird der Kleinheizlüfter mit Vorteil als Kleinlüfter ausgebildet. Derartige Kleinlüfter oder Minilüfter haben sehr kleine Abmessungen. Sie werden vor allem in der Elektronik als aktive Kühlelemente verwendet und verbinden eine sehr kompakte Bauweise mit Preiswürdigkeit, ausreichender Lebensdauer und hohem Wirkungsgrad. Z.B. haben
- die Lüfter der ebm-papst-Serie 400F Abmessungen von 10 x 40 x 40 mm,
- die der ebm-papst-Serie 400 von 20 x 40 x 40 mm,
- und die Lüfter der ebm-papst-Serie 600 von 25 x 60 x 60 mm.
Die Leistungsaufnahme solcher Lüfter liegt bei der Serie 400F bei 0,7 ... 0,9 W, und bei den Serien 400 und 600 bei 0,9 ... 3,4 W. Das Gewicht beträgt z.B. bei der Serie 400/400F zwischen 17 und 27 g, und bei der Serie 600 etwa 85 g.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: eine raumbildliche Darstellung einer bevorzugten Ausgestaltung eines erfindungsgemäßen Kleinheizlüfters mit einer ersten Ausführungsform eines Heizregisters nach der Erfindung, im Zustand vor dem Zusammenbau,
- Fig. 2: einen Ausschnitt aus Fig. 1 zur Erläuterung einer Einzelheit,
- Fig. 3: eine zweite Ausführungsform eines Heizregisters nach der Erfindung.

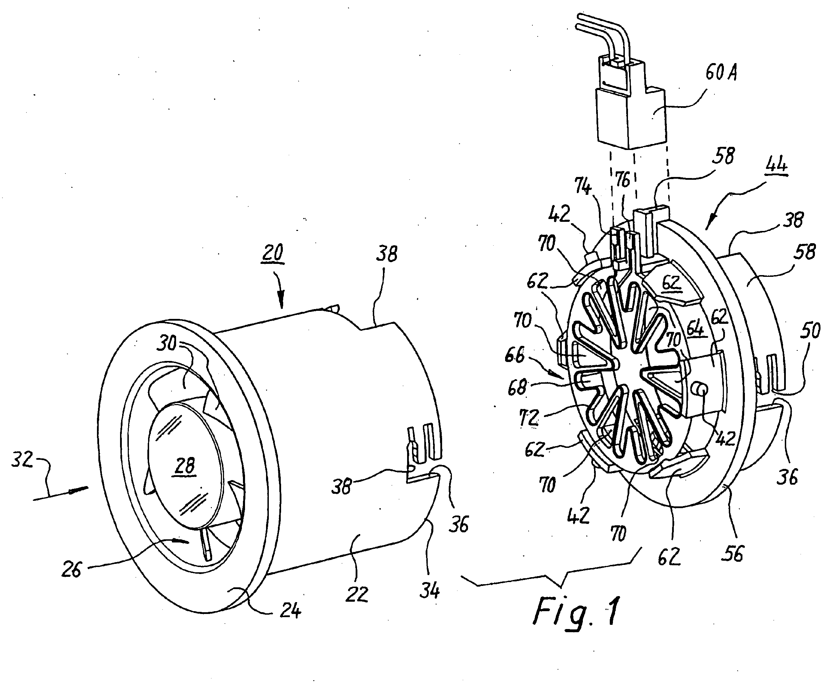

Fig. 1 zeigt links einen so genannten Rohrlüfter 20. Dieser hat ein Rohr 22, das links in der dargestellten Weise mit einem Befestigungsflansch 24 versehen ist. In diesem Rohr 22 ist der (nicht dargestellte) Innenstator eines Lüfters 26 mittels (nicht dargestellter) Speichen befestigt. Um den Innenstator herum rotiert im Betrieb ein Außenrotor 28, auf dessen Peripherie Lüfterflügel 30 befestigt sind, welche im Betrieb Luft in Richtung eines Pfeiles 32 axial durch das Rohr 22 transportieren. Aus diesem Grunde nennt man einen solchen Lüfter einen Axiallüfter. Fig. 1 zeigt links die Zuströmseite und rechts die Abströmseite des Lüfters 26.

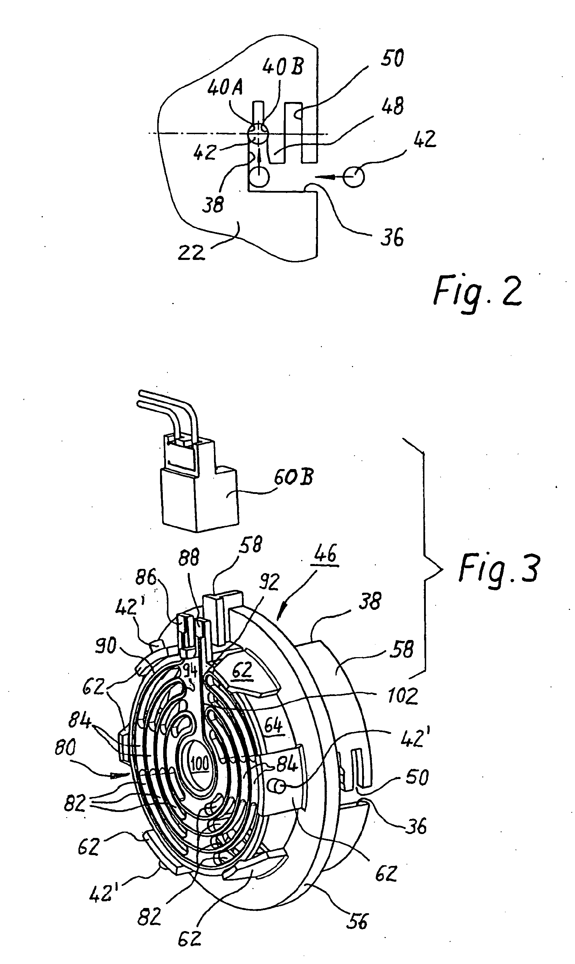

Das Rohr 22 hat an seinem rechten Ende 34 drei Ausnehmungen, von denen nur die Ausnehmungen 36 und 38 sichtbar sind. An dem in der Zeichnung oberen Rand der Ausnehmung 36 befinden sich zwei in Umfangsrichtung verlaufende Aussparungen. Eine linke Aussparung 38 hat eine Verbreiterung 40A, 40B, welche zur Verrastung mit einem Zapfen 42 dient, der an einem Heizregister 44 vorgesehen ist, oder zur Verrastung mit einem Zapfen 42' an einem Heizregister 46, das in Fig. 3 dargestellt ist.

Rechts von der linken Aussparung 38 befindet sich eine federnde Rastzunge 48, und rechts von dieser eine rechte Aussparung 50, welche parallel zur Aussparung 38 verläuft und es der Rastzunge 48 ermöglicht, beim Einführen eines Rastzapfens 42 oder 42' federnd nach rechts auszuweichen, ebenso beim Herausnehmen eines solchen Rastzapfens in der entgegengesetzten Richtung.

Entsprechende Rast-Aussparungen befinden sich bei der Ausnehmung 38 und bei der dritten, in Fig. 1 nicht sichtbaren Ausnehmung des Rohres 22.

Die Fig. 1 und 3 zeigen als Beispiele die beiden Heizregister 44 und 46. Diese haben die gleiche Basisstruktur, unterscheiden sich aber hinsichtlich der Elemente für die elektrische Heizung. Übereinstimmende Elemente werden deshalb mit denselben Bezugszeichen bezeichnet und gewöhnlich nur einmal beschrieben.

Beide Heizregister haben einen ringförmigen Träger 56, an dem oben ein elektrisches Anschlusselement 58 vorgesehen ist, das zur Verbindung mit einem Anschlussstecker 60A oder 60B dient. Die Ausnehmung 38 dient zur Aufnahme des Anschlusselements 58 und ist deshalb besonders breit ausgebildet.

Vom Träger 56 erstreckt sich nach rechts ein rohrartiger Fortsatz 58, dessen Aufbau mit der Struktur am rechten Ende 34 des Rohres 22 übereinstimmt, weshalb für gleiche oder gleich wirkende Teile dieselben Bezugszeichen verwendet werden.

Vom Ring 56 stehen nach links insgesamt sechs Führungsabschnitte 62 in axialer Richtung vor, die voneinander Abstände von jeweils 60° haben. Drei der Führungsabschnitte 62 sind mit Rastzapfen 42 bzw. 42' versehen. Diese haben jeweils Abstände von 120°. Die Führungsabschnitte 62 sind so bemessen, dass sie in das Rohr 22 passen und von diesem geführt werden.

An den Führungsabschnitten 62 ist das eigentliche elektrische Heizelement befestigt, das sich also in einem freien Durchlass 64 befindet, der von dem Ring 56 gebildet wird, so dass die vom Lüfter 26 geförderte Luft dieses Heizelement durchströmt und dabei erhitzt wird.

Beim Heizregister 44 gemäß Fig. 1 hat das Heizelement die Form einer sehr gut wärmeleitfähigen Platte 66 mit einer zentralen, sternartigen Durchbrechung 68 und insgesamt sechs im Randbereich vorgesehenen zusätzlichen Durchbrechungen 70. Diese Platte kann aus Metall oder einem hitzebeständigen, gut wärmeleitfähigen Kunststoff hergestellt sein. Dasselbe gilt analog für die Platte 80 nach Fig. 3. Die Platten 66 bzw. 80 werden elektrisch erwärmt und geben ihre Wärme an die durch strömende Luft ab. Durch Steuerung der Drehzahl des Lüfters 26 kann die Temperatur der durch strömenden Luft sehr einfach beeinflusst werden, z.B. durch einen Temperaturregler. Hierzu wird die Temperatur der aus dem Heizregister 44 oder 46 strömenden Luft mittels eines (nicht dargestellten) Sensors in bekannter Weise erfasst. Alternativ ist auch eine Regelung der Stromzufuhr zum betreffenden Heizregister möglich.

Längs der Ränder der zentralen Durchbrechung 68 verläuft eine Randauskleidung 72 aus Metall, die sowohl zum Schutz der Kanten der Durchbrechung 68 wie auch als Heizdraht dient. Dieser verläuft zwischen zwei elektrischen Anschlüssen 74 und 76, die zur Verbindung mit dem Stecker 60A dienen. Der Verlauf der elektrischen Verbindungen und des Heizdrahtes ergibt sich klar aus Fig. 1. Die Anschlüsse 74 und 76 sind bevorzugt Bestandteil der Platte 66, um eine einfache Fertigung zu ermöglichen.

Fig. 3 zeigt das Heizregister 46. Dieses hat ein Heizelement in Form einer Platte 80 mit insgesamt sechzehn Durchbrechungen 82 in Form von Kreisringsektoren, die sich jeweils über etwa 50° erstrecken und durch vier massive Abschnitte 84 mit einer Winkelerstreckung von jeweils etwa 40° voneinander getrennt sind.

Die Platte 80 hat auch hier seitliche Fortsätze 86, 88 mit elektrischen Anschlüssen, die zur Verbindung mit dem Stecker 66B dienen. Vom Anschluss 86 geht eine Verbindung zu einem in Umfangsrichtung verlaufenden Heizleiter 90, der sich entgegen dem Uhrzeigersinn etwa 330° weit erstreckt, dann bei 92 seine Richtung umkehrt und in Gegenrichtung zurück verläuft bis zu einer Umkehrstelle 94, etc.

Der innerste Abschnitt des Heizleiters 90 umschließt eine zentrale Öffnung 100 und ist über einen radialen Abschnitt 102 mit dem elektrischen Anschluss 88 verbunden. Wie man erkennt, wird jede der Durchbrechungen 82 an mindestens einem Randabschnitt vom Heizleiter 90 berührt.

Der Heizleiter 90 wird zweckmäßig als Folie auf die Platte 80 aufgebracht, um eine einfache Montage zu ermöglichen.

Wie aus den Zeichnungen hervorgeht, kann mit dem Rohr 22 entweder das Heizregister 44 oder das Heizregister 46 gekoppelt werden.

Auch kann man gemäß Fig. 1 das Heizregister 44 mit dem Rohr 22 und anschließend das Heizregister 46 mit dem Heizregister 44 verbinden. Da es sich um eine modulare Bauweise handelt, ergibt sich eine große Variationsbreite. Auch kann z.B. mit dem Rohr 22 zunächst ein (nicht dargestelltes) Verbindungsknie verbunden werden, um die aus dem Rohr 22 austretende kalte Luft z.B. um 90° nach unten umzulenken, und an das freie Ende dieses Knies kann man dann ein oder mehrere Heizregister anschließen, um genau an einer gewünschten Stelle eine hohe Wärmekonzentration zu erreichen, z.B. am Dieselfilter eines Motors.

Naturgemäß sind im Rahmen der vorliegenden Erfindung vielfache Abwandlungen und Modifikationen möglich.

## Patentansprüche

1. Kleinheizlüfter, insbesondere für ein Fahrzeug, welcher Kleinheizlüfter aufweist:
Ein Lüftergehäuse (22), In welchem ein Motor mit einem Außenrotor (28) angeordnet ist;
am Außenrotor (28) angeordnete Lüfterflügel (30) zum Transport von Luft durch das Lüftergehäuse (22);
mindestens ein elektrisches Heizregister (44; 46), welches auf der Luftabströmseite der Lüfterflügel (30) angeordnet und über eine lösbare Rastverbindung (38, 42) mit dem Lüftergehäuse (22) lösbar verbunden ist,
welches Heizregister (44; 46) eine wärmeleitfähige Platte (66; 80) mit Durchbrechungen (68, 70; 82) aufweist, an deren Rändern zumindest bereichsweise ein Heizdraht (72; 90) vorgesehen ist, welche Platte im Betrieb elektrisch erwärmt wird und ihre Wärme an die durchströmende Luft abgibt.

2. Kleinheizlüfter nach Anspruch 1, bei welchem der Heizdraht (72; 90) mindestens bereichsweise als elektrisches Widerstands-Heizelement zur Erwärmung der wärmeleitfähigen Platte (66; 80) ausgebildet ist.

3. Kleinheizlüfter nach Anspruch 1, bei welchem der Heizdraht (72) mindestens bereichsweise als Randauskleidung (72) aus Metall ausgebildet ist, die zum Erwärmen der wärmeleitfähigen Platte (66) am Rand der In ihr vorgesehenen Durchbrechungen (68) vorgesehen Ist, welche Randauskleidung (72) mit elektrischen Anschlüssen (74, 76) zur Stromzufuhr verbunden ist und als Widerstands-Heizelement zum Erwärmen der wärmeleitfähigen Platte (66) dient.

4. Kleinheizlüfter nach Anspruch 1, bei welchem der Heizdraht (90) mindestens bereichsweise durch eine auf der wärmeleitfähigen Platte (80) befestigte Heizfolie (90) ausgebildet Ist.

5. Kleinheizlüfter nach einem der vorhergehenden Ansprüche, bei welchem das mindestens eine Heizregister (44; 46) einen Anschluss (74, 76; 86, 88) für die Stromzufuhr aufweist.

6. Kleinheizlüfter nach einem der vorhergehenden Ansprüche, bei welchem der Motor mit den an seinem Außenrotor (28) angeordneten Lüfterflügeln (30) und dem Lüftergehäuse (22) einen so genannten Kleinlüfter bildet.

7. Kleinheizlüfter nach einem der vorhergehenden Ansprüche, bei welchem das Heizregister (44; 46) auf seiner vom Lüftergehäuse (22) abgewandten Seite mit einem Verbindungsglied (36, 50) zur Verrastung mit einem anderen Heizregister versehen ist.

8. Kleinheizlüfter nach einem der vorhergehenden Ansprüche, bei welchem die wärmeleitfähige Platte (66; 80) aus Metall hergestellt ist.

9. Kleinheizlüfter nach einem der Ansprüche 1 bis 7, bei welchem die wärmeleitfahige Platte (66; 80) aus einem hitzebeständigen Kunststoff hergestellt ist.

## Claims

1. Small heater blower, particularly for a vehicle, which small heater blower has:
- a blower housing (22) in which a motor having an external rotor (28) is arranged;
- blower blades (30) for transporting air through the blower housing (22), which are arranged on the external rotor (28);
- at least one electric heating register (44; 46) which is arranged on the air outflow side of the blower blades (30) and is detachably connected to the blower housing (22) via a releasable latching connection (38, 42), which heating register (44; 46) has a thermally conductive plate (66; 80) having perforations (68, 70; 82) on the edges of which a heating wire (72; 90) is provided, at least in certain regions, which plate is heated up electrically during operation and gives off its heat to the air which is flowing through.

2. Small heater blower according to claim 1, in which the heating wire (72; 90) is constructed, at least in certain regions, as an electrical resistance heating element for heating up the thermally conductive plate (66; 80).

3. Small heater blower according to claim 1, in which the heating wire (72) is constructed, at least in certain regions, as a peripheral lining (72) made of metal which is provided for heating up the thermally conductive plate (66) at the edge of the perforations (68) provided in it, which peripheral lining (72) is connected to electrical connections (74, 76) for supplying power, and serves as a resistance heating element for heating up the thermally conductive plate (66).

4. Small heater blower according to claim 1, in which the heating wire (90) is constructed, at least in certain regions, by a heating foil (90) which is fastened on the thermally conductive plate (80).

5. Small heater blower according to one of the preceding claims, in which the at least one heating register (44; 46) has a connection (74, 76; 86, 88) for the power supply.

6. Small heater blower according to one of the preceding claims, in which the motor constitutes, with the blower blades (30) arranged on its external rotor (28) and the blower housing (22), a so-called "small blower".

7. Small heater blower according to one of the preceding claims, in which the heating register (44; 46) is provided, on its side that faces away from the blower housing (22), with a connecting member (36, 50) for latching engagement with another heating register.

8. Small heater blower according to one of the preceding claims, in which the thermally conductive plate (66; 80) is manufactured from metal.

9. Small heater blower according to one of claims 1 to 7, in which the thermally conductive plate (66; 80) is manufactured from a heat-resistant plastic.

## Revendications

1. Petit ventilateur de chauffage notamment dévolu à un véhicule, lequel petit ventilateur de chauffage comprend :
un carter (22), dans lequel se trouve un moteur muni d'un rotor extérieur (28) ;
des ailettes de ventilation (30) implantées sur ledit rotor extérieur (28), en vue de convoyer de l'air par ledit carter (22) du ventilateur ;
au moins un registre de chauffage électrique (44 ; 46) qui est placé du côté sortie d'air desdites ailettes de ventilation (30) et est relié audit carter (22) du ventilateur, de manière libérable, par l'intermédiaire d'une liaison par encliquetage (38, 42) dissociable, lequel registre de chauffage (44 ; 46) présente une platine thermoconductrice (66 ; 80) munie de perforations (68, 70 ; 82) sur les bords desquelles un fil métallique chauffant (72 ; 90) est prévu au moins par zones, laquelle platine est chauffée électriquement, en service, et cède sa chaleur à l'air en circulation.

2. Petit ventilateur de chauffage selon la revendication 1, dans lequel le fil métallique chauffant (72 ; 90) est réalisé, au moins par zones, sous la forme d'un élément chauffant par résistance électrique qui est dévolu au chauffage de la platine thermoconductrice (66 ; 80).

3. Petit ventilateur de chauffage selon la revendication 1, dans lequel le fil métallique chauffant (72) est réalisé, au moins par zones, sous la forme d'un garnissage marginal (72) en métal prévu, afin de chauffer la platine thermoconductrice (66), sur le bord des perforations (68) pratiquées dans cette dernière, lequel garnissage marginal (72) est raccordé à des connexions électriques (74, 76) dédiées à l'arrivée de courant, et remplit la fonction d'un élément chauffant par résistance électrique qui est dévolu au chauffage de ladite platine thermoconductrice (66).

4. Petit ventilateur de chauffage selon la revendication 1, dans lequel le fil métallique chauffant (90) est matérialisé, au moins par zones, par un film chauffant (90) fixé sur la platine thermoconductrice (80).

5. Petit ventilateur de chauffage selon l'une des revendications précédentes, dans lequel le registre de chauffage (44 ; 46), à présence minimale, est doté d'une connexion (74, 76 ; 86, 88) dédiée à l'arrivée de courant.

6. Petit ventilateur de chauffage selon l'une des revendications précédentes, dans lequel le moteur forme un « petit ventilateur » en association avec les ailettes de ventilation (30) implantées sur son rotor extérieur (28), et avec le carter (22) dudit ventilateur.

7. Petit ventilateur de chauffage selon l'une des revendications précédentes, dans lequel le registre de chauffage (44 ; 46) est pourvu, sur son côté tourné à l'opposé du carter (22) dudit ventilateur, d'un organe de liaison (36, 50) destiné à l'encliquetage avec un autre registre de chauffage.

8. Petit ventilateur de chauffage selon l'une des revendications précédentes, dans lequel la platine thermoconductrice (66 ; 80) est fabriquée en métal.

9. Petit ventilateur de chauffage selon l'une des revendications 1 à 7, dans lequel la platine thermoconductrice (66 ; 80) est fabriquée en une matière plastique résistant à la chaleur.
